# DEMANDE DE BREVET EUROPEEN

(11) **EP 1 918 485 A2**
(43) Date de publication de la demande: **07.05.2008**
(21) Numéro de dépôt: 07301495.3
(22) Date de dépôt: 26.10.2007
(51) Int. Cl.: E04F 19/04

(54) **Pièces d'angle de revêtement de sol dans les angles sortants de jonction sol et mur, appareil et procédé de pose**

(30) Priorité: 31.10.2006 FR 0654643
(71) Demandeur: GERFLOR, 69100 Villeurbanne (FR)
(72) Inventeur: MOSSOT, Yves, 69170, TARARE (FR)
(74) Mandataire: Dupuis, François

(57) **Abrégé**

L'invention vise un appareil de pose de module constituant une pièce d'angle sortant sous forme de module pour revêtement de sols et murs. L'appareil comprend une plaque d'appui (2) au sol comprenant une partie arrière (2b) d'appui des genoux de l'opérateur et présentant en avant une potence (3) fixe profilée susceptible de recevoir dans sa partie supérieure un étrier support (4) orientable angulairement par rapport à la potence, et en ce que l'étrier support est conformé pour recevoir un premier moyen (5) de centrage de l'appareil contre la pièce d'angle sortant de la paroi de mur récepteur du module, un second moyen de prise (6) par l'opérateur et des troisièmes moyens à actionner de transmission et d'appui sur le module en vue de sa mise en forme finale, lesdits troisièmes moyens contribuant à la déformation par fluage de certaines parties du module à poser.

L'invention vise le module en lui-même et le procédé de pose du module par l'appareil précité.

## Description

L'invention se rattache au secteur technique des revêtements de sols et murs à l'aide de matériaux en polychlorure de vinyle et similaires. La pose des revêtements de sols dans les zones d'angles de jonction de sols et murs est très délicate, et entraîne de nombreux problèmes dans la technique de pose elle-même, dans les aspects visuels obtenus de qualité plus ou moins satisfaisante, et dans les conditions d'entretien. Ces difficultés se retrouvent aussi bien pour la pose de revêtements dans les zones d'angles rentrants que dans les zones d'angles sortants. Le demandeur a imaginé et conçu un dispositif et un procédé de pose de revêtements dans les angles rentrants, objet de la demande de brevet français n° 05 51607, très satisfaisant dans sa fiabilité de mise en oeuvre et les résultats obtenus.

Par contre, les problèmes de pose de ces revêtements en angles sortants restent entiers et non résolus. Ceux-ci sont en plus et visuellement plus apparents pour l'individu, ce qui est gênant. En pratique, le poseur est généralement amené à faire des ajouts de matériaux à certains endroits pour tenter de faire un raccord à peu près homogène entre les deux parois de mur adjacentes à raccorder et la partie de sol sous-jacente en procédant selon une méthodologie particulière à la formation d'une soudure, plus ou moins difficile à exécuter.

L'effet esthétique obtenu est donc de qualité très moyenne, dépend de l'expérience du poseur et de son habilité à positionner les parties de revêtements en essayant d'occulter le plus possible l'apparence des zones de liaison. En pratique, l'opérateur effectue une ou des soudures laser ou autres dans l'angle et le long de l'arrête de deux morceaux de revêtements rapportés.

Une autre technique existe aussi dans la découpe en V d'une pièce rapportée et soudée sur le revêtement de sol en place, mais les résultats obtenus sont peu probants.

Il est connu aussi de mettre dans ces zones d'angles une pièce thermoformée fabriquée préalablement en usine, mais on se retrouve face à des contraintes d'adaptabilité de cette pièce à son endroit de pose qui ne correspond pas toujours et loin s'en faut aux formes et lignes géométriques préétablies de manière industrielle de la pièce thermoformée par rapport à la zone d'angle in situ d'une construction. En d'autres termes, la mise en place de la pièce thermoformée exige souvent des opérations complémentaires de pose, car les défauts de planéité et de verticalité des murs et donc des angles surtout existent.

Toutes ces opérations précitées relatives à l'art antérieur induisent donc que les pièces de revêtement utilisées en angle sortant ou la pièce thermoformée ont une structure, volume, dimension et épaisseur constante, le revêtement final posé correspondant aux caractéristiques de revêtement ou pièce de revêtement initiale.

Un autre problème de l'art antérieur est que les méthodes de pose des revêtements de sols dans les parties d'angles sortants requièrent généralement l'intervention de deux opérateurs, l'un pour assurer la tenue du revêtement d'angle, et l'autre pour assurer la fixation aux parois des murs lors des opérations de soudure. On comprend donc que ces procédés sont peu pratiques, avec des résultats en qualité moyenne, voire inférieure, tout en requérant une certaine expertise du ou des opérateurs.

On connaît par ailleurs, par le brevet WO 91/10554, un procédé de pose de module sur des angles sortants mettant en oeuvre la réalisation d'une plaque de dimensions spécifique à la forme finale à obtenir, à la chauffer et la mettre en forme sur la zone d'angle sortant puis à la refondre et à la découper à la forme finale définitive. La mise en oeuvre de ce procédé reste plus pratique avec un déchet conséquent de matière sans compter l'opération de finition pour découpage qui laisse apparaître, selon la dextérité de l'opérateur, des finitions de qualité très variable.

On connaît aussi, par le brevet US 5.855.361, un appareil permettant de positionner, en appui, une pièce d'angle sortant contre le mur. Cependant, cet appareil n'a aucune fonction sur les caractéristiques même des modules à poser.

La démarche du demandeur a donc été de réfléchir à un nouveau concept de pose des revêtements de sols et d'angles sortants plus facile à mettre en oeuvre, plus rapide à exécuter par un seul intervenant et de qualité bien meilleure.

Pour cela, le demandeur a recherché une solution qui permette de s'affranchir des classiques opérations de soudure en angle difficiles à exécuter, réalisées à l'aide d'appareils ad hoc et manipulés par une première personne, tandis qu'une seconde personne tient le revêtement à souder en place, lesdites personnes pouvant de se gêner elles-mêmes en étant au même endroit.

Ces buts et objectifs ambitieux restaient à réaliser, ce qui était loin d'être évident à partir de la connaissance et l'utilisation des revêtements ayant des caractéristiques structurelles et dimensionnelles uniformes.

La démarche inventive du demandeur a alors été de s'orienter sur la capacité de procéder à une possible modification des caractéristiques structurelles et dimensionnelles des revêtements d'angles sortant pour permettre une méthodologie de pose différente.

La solution imaginée par le demandeur fait intervenir par rapport à l'art antérieur une méthodologie tout à fait différente qui a des conséquences sur le revêtement d'angle sortant lui-même, sur la méthodologie de la pose du revêtement et ce, par un seul opérateur et aussi par la conception d'un équipement d'assistance particulier pour l'opérateur. Cette solution apporte de grands progrès techniques dans la simplification de la procédure de pose, n'exige pas d'intervention d'opérateur spécialisé et de grande qualification, et apporte une finition tout à fait remarquable sur les angles sortants de jonction entre murs et sols.

Ces buts et d'autres encore ressortiront bien de la suite de la description.

Selon une première caractéristique de l'invention, le module constituant la pièce d'angle sortant de revêtement de sols et murs du type comprenant une pièce plate découpée en matériau plastique susceptible d'être déformée par chauffage, et refroidie pour être posée dans une partie d'angle puis dimensionnée dans une position à la forme finale à obtenir est caractérisé en ce qu'il comprend, à l'état initial, une pièce plate découpée dans une configuration spécifique par rapport à un gabarit à partir du revêtement de sol entourant la pièce d'angle, ladite pièce d'angle comprenant une base se prolongeant vers une tête de configuration triangulaire formant chapeau avec, en intermédiaire, une partie de liaison et, de part et d'autre de cette partie de liaison, des échancrures spécifiques et curvilignes, la tête comprenant deux parois inclinées se raccordant au sommet de la pièce d'angle, et en ce que ladite pièce d'angle à l'état final présente, à l'endroit des zones pressées, une réduction d'épaisseur et des formes de raccordement extérieures rectilignes pour correspondre aux configurations des parties de revêtement de sols adjacentes à la pièce d'angle sortant du module.

Selon une autre caractéristique, l'appareil de pose de module constituant une pièce d'angle sortant pour revêtement de sols et murs comprenant une plaque d'appui au sol recevant, à articulation, un bras télescopique orientable et commandé par un levier de manoeuvre, l'extrémité dudit bras télescopique recevant un moyen d'appui du module contre la partie d'angle sortant, ledit moyen d'appui présentant, dans son centre, une forme en V correspondant angulairement à la partie d'angle sortant, est caractérisé en ce qu'il comprend une plaque d'appui au sol comprenant une partie arrière d'appui des genoux de l'opérateur et présentant en avant une potence fixe profilée susceptible de recevoir, dans sa partie supérieure, un étrier support orientable angulairement par rapport à la potence, et en ce que l'étrier support est conformé pour recevoir un premier moyen de centrage de l'appareil contre la pièce d'angle sortant de la paroi de mur récepteur du module et de pré positionnement de la pièce d'angle, un second moyen de prise par l'opérateur et des troisièmes moyens à actionner de transmission et d'appui sur le module et permettant sa mise en forme finale, lesdits troisièmes moyens, dans un plan sous jacent au premier moyen, contribuant, par pression, à la déformation par fluage de certaines parties du module à poser et la mise en forme finale du module, lesdits troisièmes moyens étant en retrait du premier moyen de centrage et de positionnement avant sollicitation, et étant déplaçables pour permettre un appui partiel et provoquer par pression un fluage de matière à l'endroit de certaines parties du module en vue de l'obtention des formes définitives du module, ledit module ayant des variations d'épaisseur dans sa structure.

Ces caractéristiques et d'autres encore ressortiront bien de la suite de la description.

Pour fixer l'objet de l'invention illustrée d'une manière non limitative aux figures des dessins où :
- la figure 1 est une vue en perspective de l'appareil réalisé selon l'invention permettant la pose de revêtement d'angles sortant.
- la figure 2 est une vue en plan d'un module de revêtement découpé selon l'invention pour s'appliquer dans un angle sortant entre deux murs ou parois consécutives.

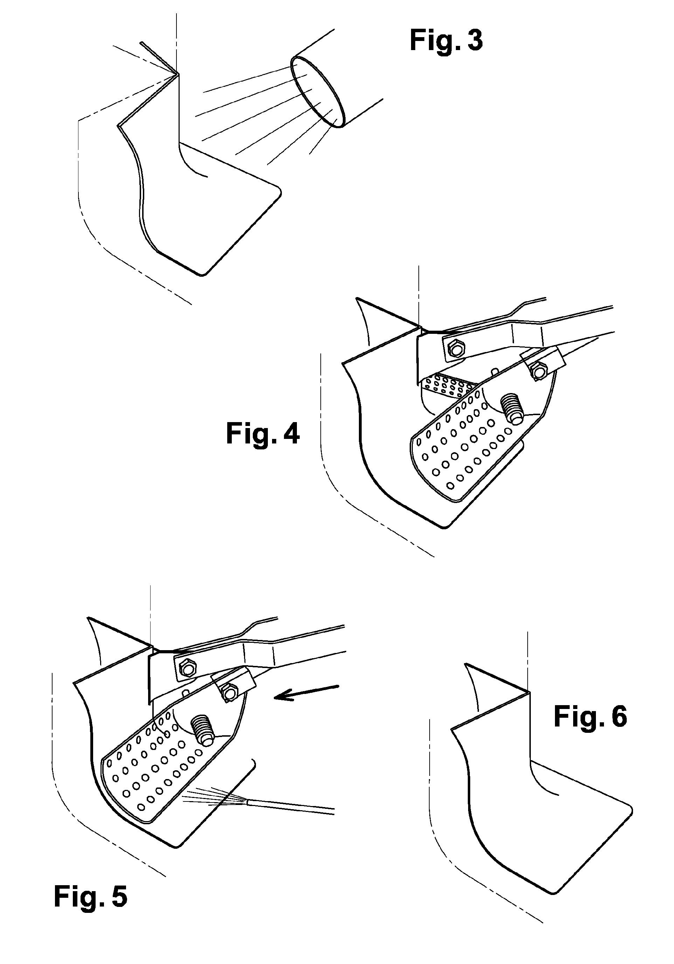

- la figure 3 est une vue à caractère schématique de la première phase opératoire de pose de revêtement d'angle sortant après chauffage du module puis avec la mise en place préalable du module.
- la figure 4 est une vue à caractère schématique de la seconde phase opératoire de pose de revêtement d'angle sortant de l'appareil selon l'invention, avant le blocage en position du module contre la partie d'angle du mur.
- la figure 5 est une vue à caractère schématique de la troisième phase opératoire de pose de revêtement d'angle sortant de l'appareil dans la situation de fixation du module, avec opérations de pressage de certaines parties du module pour une déformation par fluage.
- la figure 6 est une vue à caractère schématique illustrant le module de revêtement d'angle déformé après intervention de l'outil et se raccordant à son endroit de pose.

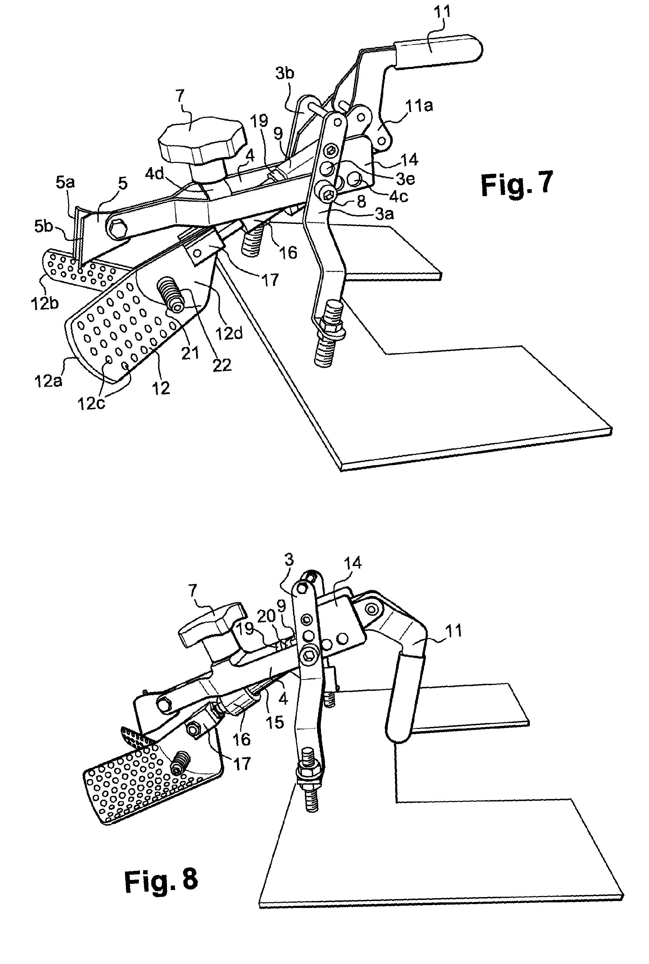

- la figure 7 est une vue en perspective montrant l'appareil avant mise en fonctionnement.
- la figure 8 est une vue en perspective de l'appareil en cours de fonctionnement.

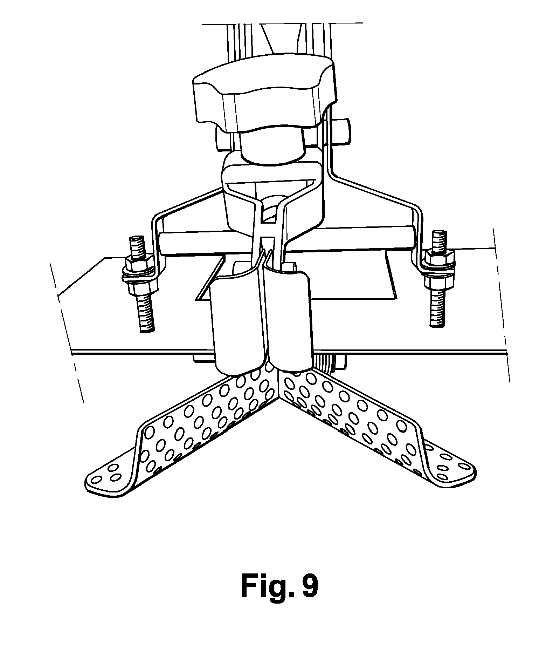

- la figure 9 est une vue de face de l'appareil.

Afin de rendre plus concret l'objet de l'invention, on le décrit maintenant d'une manière non limitative illustrée aux figures des dessins.

Selon l'invention, la mise en place des modules (1) de revêtement d'angle sortant s'effectue selon un procédé opératoire très particulier et à l'aide d'un appareil (A) permettant la mise en forme du module et sa présentation contre les parois de mur en vue de sa fixation.

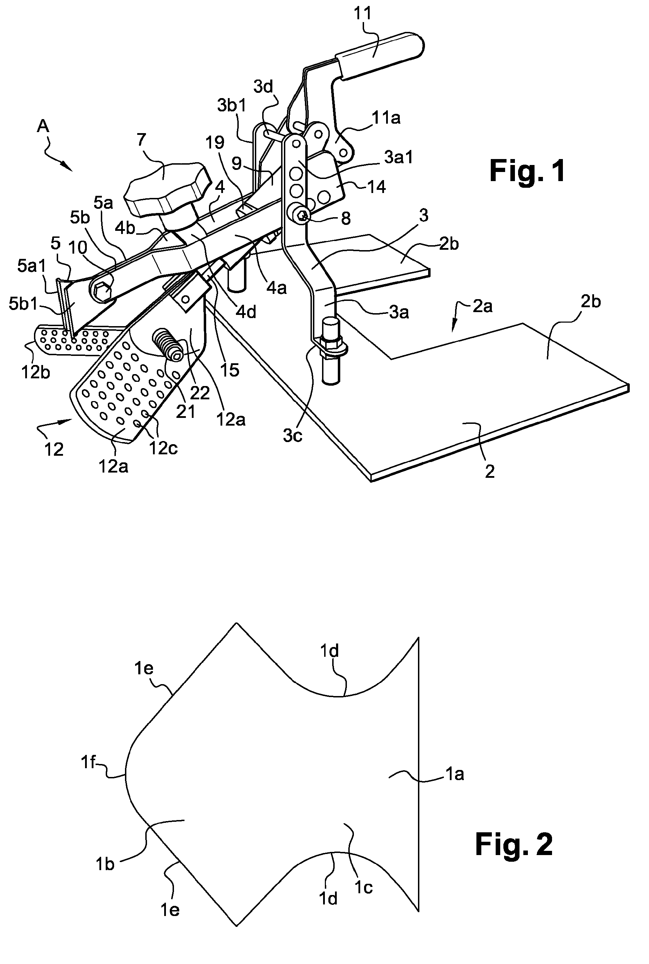

Le module (1) susceptible de constituer la pièce d'angle sortant se présente comme représenté figure 2 avant intervention et mise en place selon une pièce plate issue du revêtement, destiné à être posé dans l'endroit environnemental, et découpée dans une configuration spécifique comparativement à un gabarit préalablement établi. Elle comprend une base (1a) se prolongeant vers l'avant par une tête (1b) de configuration triangulaire formant chapeau avec en intermédiaire une partie de liaison (1c) et de part et d'autre des échancrures (1d) symétriques et curvilignes. La tête (1b) comprend aussi deux parois inclinées (1 e) se raccordant au sommet (1f) de ladite pièce. Celle-ci est réalisée en un matériau plastique du type polychlorure de vinyle constituant ce type de revêtement de manière similaire et complémentaire à la nature du revêtement de sol entourant. L'épaisseur de la pièce est uniforme. C'est ce module ainsi défini qui sera susceptible d'être appliqué comme revêtement de l'angle sortant. Cette pièce dans sa forme initiale n'est ainsi pas conçue ni adaptée pour constituer en elle-même et en l'état une pièce de raccordement avec d'autres parties de revêtements situées de part et d'autres et fixées au mur. Seule sa transformation géométrique, par une action spécifique de déformation, grâce à un appareil particulier, permettra sa mise en forme finale et sa pose à l'endroit destiné à un angle sortant.

Pour ce faire, l'appareil référencé dans son ensemble par (A) destiné à mettre en position, puis en forme, le module 1, est représenté figure 1. Il comprend une plaque d'appui au sol (2) plane de configuration rectangulaire par exemple, cette plaque permettant d'une part l'agenouillement de l'opérateur dans sa partie arrière, et d'autre part recevant dans sa partie avant le dispositif qui permet la mise en place et la mise en forme du module initial précité. La plaque comprend ainsi, dans sa partie arrière, une échancrure centrale (2a) essentiellement d'allègement, et de part et d'autre deux zones d'appui (2b) des genoux de l'opérateur de sorte que ladite plaque n'est pas déplaçable en elle-même lorsque l'opérateur est en intervention puisqu'il prend appui et la bloque en position. A l'avant de la plaque se situe une potence fixe (3) disposée verticalement constituée par deux bras (3a - 3b) profilés dont les extrémités (3a1 - 3b1) supérieures sont parallèles en laissant entre elles un espace de positionnement de moyens complémentaires qui seront décrits ci-après. La base de la potence (3c) est fixée à la plaque (2) par boulonnage ou autre moyen de liaison. Dans sa partie supérieure, la plaque inclut une entretoise de liaison (3d). Lesdits bras (3a - 3b) présentent des perforations (3e) de fixation. Ladite potence (3) entre ses bras (3a - 3b) permet la mise en place et l'orientation réglable d'un étrier support (4), lui-même articulé par rapport à ladite potence et à partir duquel sont prévus un premier moyen (5) de centrage de l'appareil contre la partie d'angle sortant de la paroi du mur recevant le module, un second moyen de préhension et de prise (7), des troisièmes moyens à actionnement et transmission et d'appui sur le module installé en vue de sa mise en forme finale.

Plus particulièrement, l'étrier support (4) présente une configuration en U avec deux ailes (4a - 4b) parallèles perpendiculaires au plan de la potence et débouchant vers l'avant de l'appareil, et aussi partiellement vers l'arrière. Cet étrier support (4) est ainsi réalisé en formant un cadre fermé à l'intérieur duquel se trouve en particulier certains des troisièmes moyens précités. L'étrier support (4) est articulé par rapport à la potence et présente des ouvertures (4c) sur ses ailes permettant le passage de moyens de fixation (8) du type boulonnage de liaison. Près de son extrémité avant, l'étrier support présente une entretoise d'appui (4d) susceptible de recevoir un pommeau d'appui (7) permettant la prise d'une main par l'opérateur et constituant le second moyen. Ce pommeau de prise permet ainsi d'agir à l'opérateur lors des exécutions des travaux en ayant une parfaite prise de l'appareil. A l'avant, l'étrier support présente un premier moyen constitué par une équerre (5) de positionnement contre l'angle de la paroi sur laquelle le module sera posé. Cette équerre est constituée par la disposition en bout de l'étrier support de deux profilés (5a - 5b) en L parallèles reliés l'un à l'autre par des moyens de liaison (10) et se prolongeant par deux pattes recourbées (5a1 - 5b1) permettant un centrage et appui autour de la partie d'angle sortant du mur. Cette équerre permet un centrage et appui de l'appareil (A) en position, ainsi qu'il sera exposé par la suite.

L'étrier support (4) reçoit intérieurement, dans son cadre, lesdits troisièmes moyens servant à l'appui et mise en forme du module in situ. En pratique, lesdits troisièmes moyens comprennent trois composants principaux à savoir un moyen de préhension et de manoeuvre (11) du mouvement, un moyen d'appui et de pression (12) sur le module et permettant sa mise en forme, et un moyen de liaison et de transmission (13) entre les précédents permettant la mise en oeuvre opératoire de l'appareil. Le premier moyen (11) ou composant est un organe de préhension qui, à sa base, est monté, articulé sur un profilé support (14), lui-même monté par rapport à l'étrier support (4) précité. L'organe de préhension forme par ailleurs une partie poignée de préhension et de commande des mécanismes. La base dudit organe est agencée avec des ailes (11a) en retrait par rapport à la partie d'articulation et reçoivent entre elles une patte support de la tige d'un poussoir (15).

Les troisièmes moyens qui se situent à l'intérieur du cadre de l'étrier support comprennent ainsi un palier (9) récepteur fixe monté, articulé, entre les ailes de l'étrier support (4) et de la potence (3) à l'aide de l'axe d'articulation (8) liant l'étrier support à la potence. Le palier récepteur présente un alésage autorisant le passage de l'axe poussoir (15) associé au levier de manoeuvre (11). L'axe poussoir est de grande longueur et déborde à l'avant en étant dans le prolongement sous jacent de l'étrier support et dans un plan non parallèle à celui-ci. L'axe poussoir, à son extrémité avant, est solidaire d'une bague (16) de liaison fixée par tous moyens appropriés. Cette dernière reçoit, dans sa partie avant, et dans le prolongement de l'axe poussoir, un étrier (17) support du moyen d'appui (12) constitué par un sabot presseur et d'appui sur le module. L'axe poussoir peut recevoir une couronne (19) fixe radiale contre laquelle prend appui un ressort de compression (20) monté sur l'axe poussoir et prenant contre appui sur le palier. Le sabot presseur est ainsi constitué en deux parties identiques (12a - 12b) mais orientées en équerre pour venir en appui sur un angle sur le module à poser. Le sabot comprend ainsi deux parties en berceau de configuration cylindrique selon un secteur angulaire de l'ordre de 90° et présente avantageusement une pluralité d'ouvertures (12c). Chaque berceau est ainsi relié à un bras plan (12d) qui est fixé à l'étrier (17) support du sabot (12). Les deux bras (12d) des deux berceaux du sabot sont ainsi parallèles et sont liés entre eux par une tige de fixation (21) et de liaison sur laquelle est monté un moyen élastique (22) du type ressort de compensation qui permet d'avoir une certaine adaptabilité de positionnement et d'écartement entre les deux berceaux.

On comprend donc que l'actionnement de la poignée de manoeuvre va provoquer la mise en place du sabot. En situation de non utilisation, la poignée de manoeuvre est relevée de sorte que l'axe poussoir se trouve en position de retrait et de ce fait, aussi, le sabot presseur. En cas d'utilisation, l'actionnement de la poignée de manoeuvre et de basculement vers le bas va, par l'effet de genouillère, provoquer le déplacement de l'axe poussoir en étant guidé et maintenu par le palier et provoquer la mise en place du sabot presseur et son appui sur le module. On comprend donc que l'actionnement de la poignée de commande et de préhension (11) va provoquer le déplacement de l'ensemble du mécanisme décrit précédemment. En situation initiale, la poignée de manoeuvre et de préhension (11) est en situation relevée, ce qui fait que l'axe poussoir n'est pas sollicité et est en position de retrait arrière, et ainsi le sabot presseur est en position de retrait. Lorsque l'opérateur aura à poser le module (1) dans la partie d'angle sortant considérée, l'opérateur devra positionner l'appareil en regard dudit angle sortant, et en particulier faire venir l'équerre de positionnement (5) dans la partie d'angle sortant à aménager mais dans une position en hauteur dégagée de la zone d'emplacement du module (1). Ladite équerre étant à position fixe par rapport à l'étrier support (4), l'appareil (A) est ainsi centré en position. L'opérateur pourra alors s'agenouiller sur la plaque de base en la bloquant en position par son propre poids, il saisit la prise d'une main le pommeau d'appui (7), et pourra actionner, de l'autre main, le moyen de commande et de préhension (11) précité. Cette intervention permettra de déplacer le sabot presseur contre le module grâce à la transmission du mouvement d'abaissement du moyen (11) et par le biais de l'axe poussoir qui va se déplacer vers l'avant.

Il est bien entendu que les mécanismes de transmission décrits entre les moyens de commande (11) et le sabot presseur (12) sont un exemple de mise en oeuvre non limitatif.

Il convient dès lors d'exposer le procédé de réalisation des angles sortants avec pose et fixation d'un module (1) de configuration précitée.

Après avoir défini un gabarit de découpe de revêtement de sol d'angle qui détermine la géométrie de la pièce de revêtement de sol qui recouvre l'angle sortant, on procède à la découpe de la pièce d'angle sortant ou module (1) à positionner. On procède ensuite au tracé d'implantation du module et on pose les profils de montée de plinthes. Le procédé de pose du module (1) s'effectue alors comme suit :
a) On encolle avec une colle contact l'envers du module ou pièce d'angle ainsi que la zone de mur et de sol réceptrice du module et on laisse sécher la colle.
b) On chauffe uniformément le module ou pièce d'angle à l'aide d'un pistolet à chaud jusqu'à obtenir une modification de l'état physique du module et permettre sa capacité à transformation.
c) On plaque manuellement le module (1) ou pièce d'angle sur l'angle sortant du mur.
d) On approche l'appareil (A) in situ et on positionne l'équerre (5) contre l'arrête du mur.
e) On bloque l'appareil en prenant appui sur la base par les genoux et on agit sur le moyen de préhension et de manoeuvre (11) qui provoque, par transmission des mouvements, l'action du sabot presseur.
f) On plaque le module ou pièce d'angle sur les remontées de plinthes et l'action du sabot presseur permet le fluage de la matière dans les zones de contact correspondantes du module. Cela va permettre une déformation en épaisseur du module dans les zones considérées d'appui et l'obtention de formes de raccordement extérieures rectilignes pour correspondre aux configurations des parties de revêtement de sol adjacentes à la pièce d'angle sortant du module (1).
g) On fixe le pourtour supérieur du module sur le mur.
h) On refroidit rapidement la partie formée avec une bombe à froid qui stabilise la configuration du module ou pièce d'angle.
i) On retire l'appareil, le module étant définitivement posé.

Ainsi, selon l'invention, l'appareil et le procédé de pose des modules, dans les angles sortants, présentent de nombreux avantages.

Tout d'abord, une seule personne est nécessaire pour procéder à l'opération, laquelle intervient de manière simple, rapide, en toute sécurité, en supprimant toutes les opérations de soudure effectuées précédemment in situ.

Le module ou pièce d'angle est formé sur place en étant découpé à partir du revêtement livré sur le chantier par une simple opération de découpage par rapport à la configuration d'un gabarit initial. La pièce d'angle sortant est donc établie dans le même matériau que le revêtement déposé dans la pièce et on obtiendra ainsi une homogénéité de décor. Le module ou pièce d'angle selon l'invention subit, lors de sa pose, une modification dans sa forme géométrique finale par rapport à son état initial, mais aussi dans son épaisseur, puisque les parties pressées par le sabot presseur ont permis un fluage de matière en vue de l'obtention de la forme finale. Il y a donc une modification de la forme et une modification de l'épaisseur du module qui n'est plus constante dans son ensemble. Cela n'est nullement gênant car les éventuelles sollicitations d'effort aux endroits considérés, après pose, sont très faibles.

La pièce d'angle ou module possède des propriétés mécaniques de résistance améliorées par rapport à la pratique antérieure. L'opérateur n'a pas besoin d'avoir la même expertise et qualification que précédemment car la pose du module ou pièce d'angle est aisée.

L'utilisation du pistolet à chaud et de la bombe de refroidissement ne pose aucune difficulté particulière de manipulation.

La qualité de fixation est nettement améliorée.

Dans l'hypothèse où une soudure périphérique entre la pièce d'angle et les autres parties de revêtement adjacentes est nécessaire, cela devient beaucoup plus facile à réaliser par l'opérateur.

## Revendications

1. Module constituant la pièce d'angle sortant de revêtement de sols et murs du type comprenant une pièce plate découpée en matériau plastique susceptible d'être déformée par chauffage, et refroidie pour être posée dans une partie d'angle puis dimensionnée dans une position à la forme finale à obtenir,
**caractérisé en ce qu'**il comprend, à l'état initial, une pièce plate découpée dans une configuration spécifique par rapport à un gabarit à partir du revêtement de sol entourant la pièce d'angle, ladite pièce d'angle comprenant une base (1a) se prolongeant vers une tête (1b) de configuration triangulaire formant chapeau avec, en intermédiaire, une partie de liaison (1c) et, de part et d'autre de cette partie de liaison, des échancrures spécifiques (1d) et curvilignes, la tête comprenant deux parois inclinées (le) se raccordant au sommet (1f) de la pièce d'angle,
et **en ce que** ladite pièce d'angle à l'état final présente, à l'endroit des zones pressées, une réduction d'épaisseur et des formes de raccordement extérieures rectilignes pour correspondre aux configurations des parties de revêtement de sols adjacentes à la pièce d'angle sortant du module.

2. Appareil de pose de module constituant une pièce d'angle sortant pour revêtement de sols et murs, le module étant du type, selon la revendication 1, l'appareil comprenant une plaque d'appui au sol recevant, à articulation, un bras télescopique orientable et commandé par un levier de manoeuvre, l'extrémité dudit bras télescopique recevant un moyen d'appui du module contre la partie d'angle sortant, ledit moyen d'appui présentant, dans son centre, une forme en V correspondant angulairement à la partie d'angle sortant,
**caractérisé en ce qu'**il comprend une plaque d'appui (2) au sol comprenant une partie arrière (2b) d'appui des genoux de l'opérateur et présentant en avant une potence (3) fixe profilée susceptible de recevoir dans sa partie supérieure un étrier support (4) orientable angulairement par rapport à la potence,
et **en ce que** l'étrier support est conformé pour recevoir un premier moyen (5) de centrage de l'appareil contre la pièce d'angle sortant de la paroi de mur récepteur du module et de pré positionnement de la pièce d'angle, un second moyen de prise (6) par l'opérateur et des troisièmes moyens à actionner de transmission et d'appui sur le module et permettant sa mise en forme finale, lesdits troisièmes moyens, dans un plan sous jacent au premier moyen, contribuant, par pression, à la déformation par fluage de certaines parties du module à poser et la mise en forme finale du module, lesdits troisièmes moyens étant en retrait du premier moyen de centrage et de positionnement (5) avant sollicitation, et étant déplaçables pour permettre un appui partiel et provoquer par pression un fluage de matière à l'endroit de certaines parties du module en vue de l'obtention des formes définitives du module, ledit module ayant des variations d'épaisseur dans sa structure.

3. Appareil, selon la revendication 2, **caractérisé en ce que** à l'avant de la plaque se situe une potence fixe (3) disposée verticalement constituée par deux bras (3a - 3b) profilés dont les extrémités (3a1 - 3b1) supérieures sont parallèles en laissant entre elles un espace de positionnement de moyens complémentaires,
et **en ce que** la potence (3) entre ses bras (3a - 3b) permet la mise en place et l'orientation réglable d'un étrier support (4), lui-même articulé par rapport à ladite potence et à partir duquel sont prévus un premier moyen (5) de centrage de l'appareil contre la partie d'angle sortant de la paroi du mur recevant le module, un second moyen de préhension et de prise (7), des troisièmes moyens à actionnement et d'appui sur le module installé en vue de sa mise en forme finale.

4. Appareil, selon la revendication 3, **caractérisé en ce que** l'étrier support (4) présente une configuration en U avec deux ailes (4a - 4b) parallèles longitudinaux perpendiculaires au plan de la potence et débouchant vers l'avant de l'appareil,
et **en ce que** l'étrier support (4) est ainsi réalisé en formant un cadre fermé à l'intérieur duquel se trouve des troisièmes moyens,
et **en ce que** l'étrier support (4) est articulé par rapport à la potence et présente des ouvertures (4c) sur ses ailes permettant le passage de moyens de fixation (8) du type boulonnage de liaison,
et **en ce que** près de son extrémité avant, l'étrier support présente une entretoise d'appui (4d) susceptible de recevoir un pommeau d'appui (7) permettant la prise d'une main par l'opérateur et constituant le second moyen,
et **en ce que** à l'avant, l'étrier support présente un premier moyen constitué par une équerre (5) de positionnement contre l'angle de la paroi sur laquelle le module sera posé.

5. Appareil, selon la revendication 4, **caractérisé en ce que** l'équerre (5) est constituée par la disposition en bout de l'étrier support de deux profilés (5a - 5b) en L parallèles reliés l'un à l'autre par des moyens de liaison (10) et se prolongeant par deux pattes recourbées (5a1 - 5b1) permettant un centrage et appui autour de la partie d'angle sortant du mur.

6. Appareil, selon la revendication 4, **caractérisé en ce que** l'étrier support (4) reçoit intérieurement, dans son cadre, lesdits troisièmes moyens servant à l'appui et mise en forme du module in situ,
et **en ce que** les troisièmes moyens comprennent trois composants principaux, un moyen de préhension (11) et de manoeuvre du mouvement, un moyen d'appui (12) sur le module et permettant sa mise en forme, et un moyen de liaison (13) entre les précédents permettant la mise en oeuvre opératoire de l'appareil.

7. Appareil, selon la revendication 6, **caractérisé en ce que** le premier moyen (11) ou composant est un organe de préhension qui, à sa base, est monté, articulé sur un profilé support (14), lui-même monté par rapport à l'étrier support (4) précité,
et **en ce que** l'organe de préhension forme par ailleurs une partie poignée de préhension et de commande des mécanismes,
et **en ce que** la base dudit organe est agencée avec des ailes (11a) en retrait par rapport à la partie d'articulation et reçoivent entre elles une patte support de la tige d'un poussoir (15).

8. Appareil, selon la revendication 7, **caractérisé en ce que** les troisièmes moyens qui se situent à l'intérieur du cadre de l'étrier support comprennent un palier (9) récepteur fixe monté, articulé, entre les ailes de l'étrier support (4) et de la potence (3) à l'aide de l'axe d'articulation (8) liant l'étrier support à la potence, ledit palier récepteur présentant un alésage autorisant le passage de l'axe poussoir (15) associé au levier de manoeuvre.

9. Appareil, selon la revendication 8, **caractérisé en ce que** l'axe poussoir (15) est de grande longueur et déborde à l'avant en étant dans le prolongement sous jacent de l'étrier support et dans un plan non parallèle à celui-ci,
et **en ce que** l'axe poussoir, à son extrémité avant, est solidaire d'une bague (16) de liaison recevant, dans sa partie avant, et dans le prolongement de l'axe poussoir, un étrier (17) support du moyen d'appui (12) constitué par un sabot presseur sur le module.

10. Appareil, selon la revendication 9, **caractérisé en ce que** le moyen d'appui (12) est le sabot presseur constitué en deux parties identiques (12a - 12b) mais orientées en équerre pour venir en appui sur un angle sur le module à poser,
et **en ce que** le sabot comprend ainsi deux parties en berceau de configuration cylindrique selon un secteur angulaire de l'ordre de 90° et présente avantageusement une pluralité d'ouvertures (12c),
et **en ce que** chaque berceau est ainsi relié à un bras plan (12d) qui est fixé à l'étrier support du sabot,
et **en ce que** les deux bras (12d) des deux berceaux du sabot sont ainsi parallèles et sont liés entre eux par une tige de fixation (21) et de liaison sur laquelle est monté un moyen élastique (22) du type ressort de compensation qui permet d'avoir une certaine adaptabilité de positionnement et d'écartement entre les deux berceaux.

11. Procédé de pose d'un revêtement d'angles sortant selon le module défini à la revendication 1 et mettant en oeuvre un appareil définit selon l'une quelconque des revendications 2 à 10, **caractérisé en ce que**, après avoir défini un gabarit de découpe de revêtement de sol d'angle, on procède à la découpe de la pièce d'angle sortant ou module (1) à positionner, on procède ensuite au tracé d'implantation du module, et on pose comme suit :
a) On encolle avec une colle contact l'envers du module ou pièce d'angle ainsi que la zone de mur et de sol réceptrice du module et on laisse sécher la colle.
b) On chauffe uniformément le module ou pièce d'angle à l'aide d'un pistolet à chaud jusqu'à obtenir une modification de l'état physique du module et permettre sa capacité à transformation.
c) On plaque manuellement le module (1) ou pièce d'angle sur l'angle sortant du mur.
d) On approche l'appareil (A) in situ et on positionne l'équerre (5) contre l'arrête du mur.
e) On bloque l'appareil en prenant appui sur la base par les genoux et on agit sur le moyen de préhension et de manoeuvre (11) qui provoque, par transmission des mouvements, l'action du sabot presseur.
f) On plaque le module ou pièce d'angle sur les remontées de plinthes et l'action du sabot presseur permet le fluage de la matière dans les zones de contact correspondantes du module, créant une déformation en épaisseur du module dans les zones considérées d'appui et l'obtention de formes de raccordement extérieures rectilignes pour correspondre aux configurations des parties de revêtement de sol adjacentes à la pièce d'angle sortant du module (1).
g) On fixe le pourtour supérieur du module sur le mur.
h) On refroidit rapidement la partie formée avec une bombe à froid qui stabilise la configuration du module ou pièce d'angle.
i) On retire l'appareil, le module étant définitivement posé.
